# EUROPEAN PATENT APPLICATION

(11) **EP 1 721 918 A2**
(43) Date of publication of application: **15.11.2006**
(21) Application number: 06009320.0
(22) Date of filing: 05.05.2006
(51) Int. Cl.: C08G 18/08, C08G 18/34, C08G 18/42

(54) **Aqueous binder dispersions, process for the production thereof and coating compositions formulated therewith**

(30) Priority: 19.09.2005 US 229784; 11.05.2005 US 679885 P
(71) Applicant: E.I. du Pont de Nemours and Company, Wilmington, DE 19898 (US)
(72) Inventor: Taschner, Marco, 42285 Wuppertal (DE); Brunner, Marcus, 42111 Wuppertal (DE); Goebel, Armin, 58300 Wetter (DE); Stamm, Holger, 42275 Wuppertal (DE)
(74) Representative: DuPont Performance Coatings Biering/Blum/Kimpel

(57) **Abstract**

Aqueous binder dispersions, which may be produced by
1) mixing 50 to 95 solids pbw (parts by weight) of non-aqueous polyurethane resin with 5 to 50 solids pbw of non-aqueous aminoplast resin, wherein the total of the solids pbw amounts to 100 and wherein polyurethane resin and aminoplast resin are inert towards each other,
2) converting the resultant non-aqueous mixture into an aqueous dispersion by mixing with water, and
3) subjecting the resultant aqueous dispersion to conditions which give rise to condensation reactions of the aminoplast resin present in the dispersion particles, until a tetrahydrofuran-insoluble binder fraction of the dispersion solids of 20 to 90 wt.% is obtained.

## Description

### Field of the invention

The invention relates to aqueous binder dispersions usable for the production of aqueous coating compositions. It also relates to processes for the production of the aqueous binder dispersions, to aqueous coating compositions produced therewith, in particular to aqueous coating compositions usable as water-borne base coats in processes for the production of decorative multilayer coatings of the water-borne base coat/dear coat type.

### Background of the Invention

In Progress in Organic Coatings 27 (1996), pages 1-15, W. Blank and V. Tramontano report experiments with aqueous polyurethane dispersions crosslinked with melamine resins. The properties of coating compositions containing a hydroxyl- and/or acid-functional, in particular, carboxyl-functional polyurethane dispersion and a melamine resin, in particular, hexamethoxymethylmefamine, as crosslinking agent and the properties of baked coatings applied from the coating compositions onto steel panels were investigated.

Aqueous binder dispersions, the dispersion particles of which consist of a material which is formed under condensation conditions by subjecting an aqueously dispersed, previously produced non-aqueous mixture of polyurethane resin and aminoplast resin, which are inert towards each other, are unknown.

### Summary of the Invention

The present invention provides aqueous binder dispersions, which are produced by
1) mixing 50 to 95 solids pbw (parts by weight) of at least one non-aqueous polyurethane resin with 5 to 50 solids pbw of at least one non-aqueous aminoplast resin, wherein the total of the solids pbw amounts to 100 and wherein polyurethane resin and aminoplast resin are inert towards each other,
2) converting the resultant non-aqueous mixture into an aqueous dispersion by mixing with water, and
3) subjecting the resultant aqueous dispersion to conditions which give rise to condensation reactions of the aminoplast resin present in the dispersion particles, until a tetrahydrofuran-insoluble binder fraction of the dispersion solids of 20 to 90 wt.%, preferably of 50 to 80 wt.%, is obtained.

### Detailed Description of the Embodiments

The description and claims make reference to the tetrahydrofuran insoluble binder fraction of the dispersion solids. This fraction is quantified gravimetrically by centrifugation. First of all, the resin solids content of a sample of the aqueous binder dispersion is determined according to DIN EN ISO 3251. To this end, a 1 g sample is weighed out and baked for 1 hour at 125°C. The insoluble binder fraction is determined by weighing out a sample quantity containing 0.3 g of resin solids into an Erlenmeyer flask on an analytical balance to an accuracy of 0.1 mg by means of a transfer pipette and then adding 30 ml of tetrahydrofuran. The contents of the sealed Erlenmeyer flask are then stirred magnetically for 30 minutes and then rinsed in their entirety into a previously weighed centrifuge sleeve and centrifuged in a centrifuge for 30 minutes at a maximum temperature of 25°C at an R.C.F. value of 56500 [R.C.F., relative centrifugal force; R.C.F.= 0.00001118 r N2; r = rotating radius (cm), N = rotating speed (revolutions per minute)]. The supernatant phase is then decanted and the centrifuge sleeve is dried with the centrifugate for 30 minutes at 150°C in a drying cabinet. After cooling to room temperature, reweighing is performed to an accuracy of 0.1 mg on the analytical balance. The insoluble binder fraction is calculated in wt.% as the quotient of the final weight (residue) and initial weight (resin solids) multiplied by 100.

The polyurethane resin(s) and aminoplast resin(s) used in process step 1) are soluble in tetrahydrofuran under the conditions of the determination method described in the paragraph above and do not themselves give rise to any insoluble binder fractions. The latter only arise under the conditions of process step 3).

The term "polyurethane resin" used in the description and claims does not rule out that the polyurethane resin in question may also contain groups other than urethane groups in the polymer backbone, such as, in particular, ether groups, ester groups and/or urea groups. Instead, the term "polyurethane resin" also, in particular, includes such polyurethane resins which contain polyether polyol building blocks, polyester polyol building blocks and/or urea groups, wherein the latter may, for example, be formed by the reaction of isocyanate groups with water and/or polyamine.

The term "polyurethane resin" includes not only finished polyurethane resins but also as yet unfinished polyurethane resins taking the form of reaction systems which have not yet reacted to completion to yield finished polyurethane resin and which, once converted into the aqueous phase, react to completion without addition of further reactants within the aqueously dispersed phase (i.e. within the disperse phase) to yield finished polyurethane resin. In particular, the term "polyurethane resin" also includes so-called polyurethane resin precursors. Polyurethane resin precursors comprise polyurethane intermediates, the reaction of which to yield the finished polyurethane resin is taken to completion within the aqueously dispersed phase. In general, further reactants are added to the polyurethane resin precursor, in particular during and/or after conversion of the polyurethane resin precursor into the aqueous phase.

Polyurethane resins and aminoplast resins which are inert towards each other are used in process step 1). For example, the polyurethane resins or polyurethane resin precursors used in process step 1) are polyurethane resins or polyurethane resin precursors which are inert towards aminoplast resins, i.e. the polyurethane resins or polyurethane resin precursors are deliberately not provided with functional groups as are conventionally present as functional groups in aminoplast resin-curable binders. For example, they are deliberately not provided with functional groups which, under the reaction conditions prevailing in process step 3), would react with the aminoplast resin(s) used in process step 1). In particular, the polyurethane resins or polyurethane resin precursors deliberately do not contain any typical functional groups, which are reactive towards aminoplast resins, such as, hydroxyl groups or primary or secondary amino groups. The phrase "polyurethane resin inert towards aminoplast resins" should, however, not be understood in its absolute sense in the present context, for example, with the meaning that the polyurethane resins cannot react with aminoplast resins under any circumstances. For example, it is not possible completely to rule out a certain level of reactivity of urethane and/or urea structures present in the polymer backbone of the polyurethane resins with aminoplast resins,

If, for example, polyurethane resin precursors with isocyanate groups are used, aminoplast resins with functional groups reactive towards isocyanate groups are not used; i.e., in particular, aminoplast resins with hydroxyl groups or primary or secondary amino groups are not used in that case.

The synthesis of polyurethane resins as well as of polyurethane resin precursors proceeds conventionally by addition reactions of polyisocyanates and synthesis building blocks which comprise groups capable of addition onto isocyanate groups, such as, for example, hydroxyl groups, primary amino groups or secondary amino groups. Examples of synthesis building blocks with hydroxyl groups, primary amino groups or secondary amino groups are low molecular weight, oligomeric or polymeric polyols, polyamines, aminoalcohols and water,

Polyurethane resin syntheses performed using polyisocyanates proceed in an anhydrous medium, for example, at temperatures of 20 to 140°C, preferably, at 50 to 100°C. Synthesis may be performed without solvents or organic solvents familiar to the person skilled in the art may be used, Solvents, which may be used, are water-miscible solvents or water-immiscible solvents, The solvents may comprise those, which may be removed at any stage of production of the aqueous binder dispersions (for example, after completion thereof), for example, by removal by distillation, optionally, under reduced pressure. Examples of usable solvents are ketones, for example, acetone, methyl ethyl ketone, methyl isobutyl ketone; N-alkylpyrrolidones, such as, for example, N-methylpyrrolidone; ethers, such as, for example, diethylene glycol dimethyl ether, dipropylene glycol dimethyl ether.

The polyurethane resins or polyurethane resin precursors used in process step 1) preferably comprise acid-functional, in particular carboxyl-functional polyurethane resins or isocyanate- and acid-functional, in particular, carboxyl-functional polyurethane resin precursors, which are in each case mixed with an appropriate quantity of aminoplast resin prior to the addition of water which proceeds in process step 2) for the purpose of forming an aqueous dispersion.

The production of acid-functional, in particular carboxyl-functional polyurethane resins may, for example, proceed by producing an ungelled acid group-containing, in particular, carboxyl group-containing and isocyanate-functional polyurethane resin precursor and reacting the free isocyanate groups thereof with one or more monofunctional compounds capable of addition with isocyanate groups, such as, for example, monoalcohols and/or primary or secondary monoamines. The way in which such acid group-containing, in particular, carboxyl group-containing and isocyanate-functional polyurethane resin precursors may be produced is described in greater detail below. Preferred acid-functional polyurethane resins usable in process step 1) have a weight-average molar mass (Mw) of 500 to 10000 and an acid value of 10 to 35 mg of KOH/g.

All statements made in the present description and the claims in relation to weight-average molar masses relate to weight-average molar masses determined by GPC (gel permeation chromatography, polystyrene standards, polystyrene gel as stationary phase, tetrahydrofuran as mobile phase).

Isocyanate-functional and acid group-containing, in particular, carboxyl group-containing, ungelled polyurethane resin precursors may be produced by reaction of one or more compounds having at least two groups reactive towards isocyanate, in particular, polyols, preferably, diols, with one or more polyisocyanates, preferably, diisocyanates and with one or more compounds having more than one, preferably, two groups reactive towards isocyanate groups and at least one acid group, in particular, carboxyl group. For example, at least one compound which bears at least two groups reactive towards isocyanate, for example, with a weight-average molar mass (Mw) of 60 to 5000, may be reacted with at least one polyisocyanate, in particular, diisocyanate and at least one compound having more than one isocyanate-reactive group and at least one acid group, in particular carboxyl group, for example, with a weight-average molar mass (Mw) of 134 to 5000 in an NCO/OH ratio of greater than 1 to 2:1, preferably of 1.1 to 1.5:1.

The at least one compound which bears at least two groups reactive towards isocyanate preferably comprises at least one polyether-, polyester- and/or polycarbonate-based polyol having at least two OH groups per molecule and a weight-average molar mass (Mw) of 500 to 5000, one or more at least difunctional low molecular weight alcohols and/or amines and/or aminoalcohols with a molar mass of 60 to below 500 optionally also being used.

Any desired polyisocyanates may be used as the polyisocyanates. Aliphatic, cycloaliphatic, aromatic or araliphatic diisocyanates may, for example, be used. Examples of suitable diisocyanates are hexane diisocyanate, isophorone diisocyanate, bis(4-isocyanatocyclohexyl)methane, bis(4-isocyanatophenyl)methane, tetramethylxylylene diisocyanate and 1,4-cyclohexane diisocyanate.

Compounds which may be used as the compound with more than one isocyanate-reactive group and at least one acid group are preferably low molecular weight compounds which contain more than one, preferably two or at least two groups which react with isocyanate groups and at least one acid group. Suitable groups, which react with isocyanate groups, are in particular hydroxyl groups, primary amino groups and secondary amino groups. The carboxyl groups preferred as acid groups may, for example, be introduced by using hydroxyalkanoic carboxylic acids. Dihydroxyalkanoic acids, in particular alpha,alpha-dimethylolalkanoic acids, such as, alpha,alpha-dimethylolpropionic acid, are preferred.

Isocyanate-functional and acid group-containing, in particular carboxyl group-containing polyurethane resin precursors may be reacted to yield a finished polyurethane resin before or preferably during and/or after conversion into the aqueous phase by reaction with at least one chain extender as a further reactant and so be increased in molecular weight. The proportion by weight of the at least one chain extender relative to the proportion by weight of the isocyanate and acid group-containing polyurethane resin precursor is here only slight, the ratio by weight generally being below 5, in particular between greater than 0 and below 2 pbw of chain extender: 100 pbw of the isocyanate group- and acid group-containing polyurethane resin precursor. Examples of chain extenders reactive towards isocyanate groups are polyols, hydrazine (derivatives), polyamines, such as, ethylenediamine, or also water, but the latter only in a quantity sufficient to hydrolyze isocyanate groups and not sufficient to convert the reaction mixture into the aqueous phase. In the case of water, chain extension proceeds by hydrolysis of NCO groups to NH2 groups and the spontaneous addition thereof to as yet unhydrolyzed NCO groups.

As has already been stated, the reaction of the free isocyanate groups with the at least one chain extender may proceed before conversion of the isocyanate- and acid-functional polyurethane resin precursor into an aqueous dispersion. Apart from when water is used as the chain extender, however, chain extension preferably proceeds during and/or after conversion into the aqueous dispersion.

The proportions of the individual educts in the chain extension may in particular, for example, be selected and the reaction performed in such a manner that the finished, chain-extended polyurethane resin has a weight-average molar mass (Mw) of 20000 to 50000 and an acid value of 10 to 35 mg of KOH/g,

Both in the case of non-aqueous polyurethane resins and in the case of non-aqueous polyurethane resin precursors, these substances may assume the form of a solvent-free melt or preferably of an organic solution, in particular, of an organic solution in a water-miscible solvent (mixture), wherein in the case of isocyanate-functional polyurethane resin precursors no organic solvents reactive towards isocyanate are taken into consideration. Examples of usable solvents are esters, for example, butyl acetate; mono- or polyhydric alcohols, for example, propanol, butanol, hexanol; glycol ethers or esters, for example, diethylene glycol dialkyl ethers, dipropylene glycol dialkyl ethers, in each case with alkyl residues comprising one to six carbon atoms, ethoxypropanol, ethylene glycol monobutyl ether; glycols, for example, ethylene glycol, propylene glycol, and the oligomers thereof; N-alkylpyrrolidones, for example, N-methylpyrrolidone; ketones, for example, methyl ethyl ketone, acetone, cyclohexanone and aromatic or aliphatic hydrocarbons.

The aminoplast resins used in process step 1) on mixing with the non-aqueous polyurethane resins or polyurethane resin precursors comprise aminoplast resins known in the coatings sector as crosslinking agents. The aminoplast resins are produced using known industrial processes by condensing compounds bearing amino or amido groups, such as, dicyandiamide, urea, glycoluril, but in particular triazines such as melamine, benzoguanamine or acetoguanamine with aldehydes, in particular formaldehyde, in the presence of alcohols such as methanol, ethanol, propanol, iso-butanol, n-butanol and hexanol. The condensation products may be partially or completely etherified. The reactivity of the aminoplast resins depends on different factors, for example, the degree of alkylolation, the degree of etherification and the etherification alcohol. For the purposes of the process according to the invention, no restrictions apply in principle to the selection of the aminoplast resin, as the conditions prevailing in process step 3) during formation of the tetrahydrofuran-insoluble binder fraction of the dispersion solids, in particular the temperature and duration of reaction, may be adapted to the reactivity of the aminoplast resin used. In the event that isocyanate-functional polyurethane resin precursors are mixed with aminoplast resin in process step 1), as already stated, aminoplast resins with groups reactive towards isocyanate groups are not used; furthermore in that case, aminoplast resins in the form of an alcoholic solution are preferably not used.

Melamine resins are preferably used as the aminoplast resins, in particular, completely etherified and, specifically, completely methanol-etherified types such as hexamethoxymethylmelamine.

Examples of methyl-etherified melamine resins are the commercial products Cymel® 301, Cymel® 303, Cymel® 325, Cymel® 327, Cymel® 350 and Cymel® 370 from Cytec and Maprenal® MF 927 and Maprenal® MF 900 from Surface Specialties. Further examples are butanol- or isobutanol-etherified melamine resins such as, for example, the commercial products Setamin® US 138 from Akzo and Maprenal® MF 610 and Maprenal® MF 3615 from Surface Specialties or co-etherified melamine resins, which are both butanol and methanol-etherified, such as, for example, Cymel® 254 from Cytec.

The non-aqueous polyurethane resin or the non-aqueous polyurethane resin precursor are mixed in process step 1) with aminoplast resin in a solids ratio by weight of 50 to 95 parts of non-aqueous polyurethane resin or polyurethane resin precursor: 5 to 50 parts of non-aqueous aminoplast resin, the proportions totalling 100 parts.

This mixing proceeds in a suitable part of the process, for example, before, during and/or after the reaction of the isocyanate groups of an isocyanate-functional polyurethane with monofunctional compounds capable of addition with isocyanate groups by mixing an appropriate quantity of aminoplast resin prior to the addition of water in process step 2) for the purpose of forming the aqueous dispersion. In the case of acid- and isocyanate-functional polyurethane resin precursors which are to be chain-extended, incorporation of the appropriate quantity of aminoplast resin proceeds, for example, before, during and/or after the reaction of the isocyanate groups of the polyurethane resin precursor with chain extenders, but in any event still before the addition of water in process step 2) for the purpose of forming the aqueous dispersion,

In the case of acid group-comprising polyurethane resins or polyurethane resin precursors, these are neutralized at a suitable point in time, preferably before or at the latest during the addition of water which occurs in process step 2), in order to ensure water dilutability. Examples of usable neutralizing agents are amines and aminoalcohols.

If the non-aqueous polyurethane resins or non-aqueous polyurethane resin precursors comprise substances which are not dilutable with water, the conversion thereof into an aqueous dispersion may also proceed with addition of external emulsifiers. Water-dilutable polyurethane resins or polyurethane resin precursors are, however, preferred, the water dilutability of which arises from their content of neutralized acid groups, in particular, carboxyl groups.

In process step 2), the non-aqueous mixture of polyurethane resin or polyurethane resin precursor and aminoplast resin is converted by mixing with water into an aqueous dispersion with a solids content of, for example, 20 to 45 wt.%. In the case of a polyurethane resin precursor, the formation of the finished polyurethane resin, for example, the chain extension of an isocyanate-functional polyurethane resin precursor already described above, is taken to completion within the aqueously dispersed phase. In parallel to and/or after completion of the polyurethane resin, for example, before, during and/or after conclusion of the chain extension performed within the aqueously dispersed phase, the resultant aqueous dispersion may be subjected in process step 3) to conditions which give rise to condensation reactions of the aminoplast resin present in the dispersion particles and to the formation of the tetrahydrofuran-insoluble binder fraction of the dispersion solids. The aqueous dispersion is subjected to conditions which give rise to condensation reactions of the aminoplast resin present in the dispersion particles until a tetrahydrofuran-insoluble binder fraction of the dispersion solids of 20 to 90 wt.%, preferably of 50 to 80 wt.%, is obtained. In particular, to this end, heat is supplied and/or a catalyst added, for example, an acid, such as, for example, para-toluenesulfonic acid. In the event that a polyurethane resin precursor is used, care is preferably taken to ensure that the polyurethane resin precursor, the substances used for the reaction thereof to yield the finished polyurethane resin and/or the reaction conditions prevailing during completion of polyurethane resin synthesis are selected such that the aminoplast resin cannot react with the raw materials used for polyurethane resin synthesis.

The condensation reaction which proceeds in the aqueous dispersion in process step 3) may, for example, be performed by heating, for example, for 30 minutes to 10 hours to 50 to 95°C or, for example, when an autoclave is used, also to higher temperatures, for example, of up to 120°C, wherein the aminoplast resin present in the dispersion particles enters into condensation reactions, The duration of reaction and reaction temperature are substantially determined by the reactivity of the aminoplast resin used, since, for example, as has already been stated, polyurethane resin which is inert towards aminoplast resins is used. In the case of carboxyl-functional polyurethane resins, the process is performed in such a manner that the carboxyl groups do not react with the aminoplast resin; compliance with such conditions may straightforwardly be ensured by monitoring the acid value or constancy of the acid value. The heating which is performed for the purpose of condensation may serve an additional purpose, namely the removal by distillation of any organic solvents optionally present in the aqueous dispersion, for example, solvents which have been used during polyurethane resin synthesis or synthesis of a polyurethane resin precursor. Distillation may also be promoted by a reduced pressure or be performed as an azeotropic distillation. It is believed that the aminoplast resin substantially undergoes self-condensation at the elevated temperatures, although condensation reactions with suitable groups, for example, with urethane and/or urea groups in the polymer backbone of the polyurethane resin which is also present in the dispersion particles cannot be ruled out.

As has already been stated, condensation is continued until a tetrahydrofuran-insoluble binder fraction of the dispersion solids of 20 to 90 wt.%, preferably of 50 to 80 wt.%, is obtained. Thereafter, the resultant aqueous dispersion is cooled. It is believed that, as a result of the above- explained production process, polyurethane resin and exclusively or at least substantially self-condensed aminoplast resin are associated with one another within the individual aqueously dispersed binder particles.

The solids content of the aqueous binder dispersions according to the invention suitable for the production of aqueous coating compositions is, for example, from 20 to 45 wt.%.

Using the aqueous binder dispersions according to the invention, it is possible to formulate aqueous coating compositions, the properties of which differ from those of aqueous coating compositions which, superticially considered, are of identical composition, namely from coating compositions which contain the same type and quantity of polyurethane resin and aminoplast resin, but in each case separately added. The present invention consequently also relates to aqueous coating compositions formulated with the aqueous binder dispersions according to the invention.

For example, water-borne base coats suitable for the production of base coat/clear coat two-layer coatings may be formulated with the aqueous binder dispersions according to the invention. Such water-borne base coats are distinguished in that application devices (in particular highspeed rotary bells) which come into contact with them during handling and actual application are subject to less soiling (for example, reduced bell fouling) or may be cleaned unusually easily with the organic solvents or aqueous or non-aqueous cleaning compositions conventionally used for this purpose. Special-effect water-borne base coats, in particular water- borne metallic base coats, formulated with the aqueous binder dispersions according to the invention are distinguished by excellent development of the special effect.

Water-borne base coats are produced by mixing pigments with the aqueous binder dispersions according to the invention and with the following in each case optional constituents: further binders, crosslinking agents, fillers (extenders), conventional coating additives and organic solvents.

The water-borne base coats have solids contents of, for example, 10 to 40 wt.%, preferably of 15 to 35 wt.%. The ratio by weight of pigment content to the resin solids content is, for example, from 0.05:1 to 2:1, for special-effect water-borne base coats it is, for example, preferably 0.06:1 to 0.6:1, for solid color (single-tone) water-borne base coats it is preferably higher, for example, 0.06:1 to 2:1, in each case relative to the weight of solids. Apart from water, at least one pigment, the resin solids content, which comprises at least one binder introduced by an aqueous binder dispersion according to the invention, optionally, one or more further binders differing therefrom and optionally one or more crosslinking agents, optionally, one or more fillers and optionally one or more organic solvents, the water-borne base coats in general also contain one or more conventional coating additives. The at least one binder introduced by an aqueous binder dispersion according to the invention and the optional further binders differing therefrom form the binder solids content. The phrase "optional further binders differing therefrom" includes not only binder resins but also pigment grinding resins. The binder introduced by an aqueous binder dispersion according to the invention may be the sole binder. If, in addition to the at least one binder introduced by an aqueous binder dispersion according to the invention, further binders differing therefrom are also present, the proportion thereof in the binder solids content is, for example, 25 to 75 wt.%.

Examples of binders differing from the binders introduced by an aqueous binder dispersion according to the invention are conventional film-forming, water-dilutable binders familiar to the person skilled in the art, such as, water-dilutable polyester resins, water-dilutable (meth)acrylic copolymer resins or water-dilutable polyester/(meth) acrylic copolymer hybrids and water-dilutable polyurethane resins or polyurethane/(meth)acrylic copolymer hybrids. These may be reactive or non-functional resins.

The water-borne base coats may be self drying (physically drying), self crosslinking or externally crosslinking. Accordingly, the water-borne base coats may contain crosslinking agents, such as, for example, free or blocked polyisocyanates or aminoplast resins, for example, melamine resins. The aminoplast resins stated here as an example of crosslinking agents are added separately to the water-borne base coats and should not be confused with the aminoplast resins used in the production of the aqueous binder dispersions according to the invention. Selection of the optionally used crosslinking agents depends on the type of crosslinkable groups in the binders and is familiar to the person skilled in the art. The crosslinking agents may be used individually or in combination. The mixing ratio of crosslinking agent(s) to binder(s) is, for example, to 10:90 to 40:60, preferably 20:80 to 30:70, in each case relative to the solids weight.

The water-borne base coats contain conventional coating pigments, for example, special effect pigments and/or pigments selected from among white, colored and black pigments.

Examples of special effect pigments are conventional pigments which impart to a coating a color and/or lightness flop dependent on the angle of observation, such as, metal pigments, for example, made from aluminum, copper or other metals, interference pigments such as, for example, metal oxide coated metal pigments, for example, iron oxide coated aluminum, coated mica such as, for example, titanium dioxide coated mica, pigments which produce a graphite effect, iron oxide in flake form, liquid crystal pigments, coated aluminum oxide pigments, and coated silicon dioxide pigments.

Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments and perylene pigments.

The water-borne base coats may also contain fillers, for example, in proportions of 0 to 30 wt.% relative to the resin solids content. Fillers do not constitute part of the pigment content. Examples are barium sulfate, kaolin, talcum, silicon dioxide, and layered silicates.

Special effect pigments are in general initially introduced in the form of a conventional commercial aqueous or non-aqueous paste, optionally combined with preferably water-dilutable organic solvents and additives and then mixed with aqueous binder. Pulverulent special-effect pigments may first be processed with preferably water-dilutable organic solvents and additives to yield a paste.

White, colored and black pigments and/or fillers may, for example, be ground in a proportion of the aqueous binder. Grinding may preferably also take place in a special water-dilutable paste resin. Grinding may be performed in conventional assemblies known to the person skilled in the art. The formulation is then made up with the remaining proportion of the aqueous binder or of the aqueous paste resin.

The water-borne base coats may contain conventional coating additives in conventional coating quantities, for example, of 0.1 to 5 wt.%, relative to the solids content thereof. Examples are neutralizing agents, antifoaming agents, wetting agents, adhesion promoters, catalysts, levelling agents, anticratering agents, thickeners and light stabilizers.

The water-borne base coats may contain conventional coating solvents, for example, in a proportion of preferably less than 20 wt.%, particularly preferably, of less than 15 wt.%. These are conventional coating solvents, which may originate, for example, from production of the binders or are added separately. Examples of such solvents are mono- or polyhydric alcohols, for example, propanol, butanol, hexanol; glycol ethers or esters, for example, diethylene glycol dialkyl ether, dipropylene glycol dialkyl ether, in each case with C1-6 alkyl, ethoxypropanol, ethylene glycol monobutyl ether; glycols, for example, ethylene glycol; propylene glycol and the oligomers thereof; N-alkylpyrrolidones, for example, N-methylpyrrolidone; ketones, for example, methyl ethyl ketone, acetone, cyclohexanone and aromatic or aliphatic hydrocarbons.

The water-borne base coats may be used for the production of the color- and/or special effect-imparting coating layer within a base coat/clear coat two-layer coating. The water-borne base coats may be applied by conventional methods. They are preferably applied by spraying to a dry film thickness of, for example, 8 to 40 µm; for special-effect water-borne base coats the dry film thickness is, for example, 8 to 25 µm, while for solid color water-borne base coats it is preferably greater, for example, 10 to 40 µm. Application preferably proceeds by the wet-on-wet process, i.e., after a flash-off phase, for example, at 20 to 80°C, the water-borne base coat layers are overcoated with a clear coat to a dry film thickness of preferably 30 to 60 µm and dried or crosslinked together with the latter at temperatures of, for example, 20 to 150°C. Drying conditions for the top coat layer (water-borne base coat and clear coat) are determined by the clear coat system used. Temperatures of 20 to 80°C are, for example, preferred for repair purposes. For the purposes of mass-production coating, temperatures of above 100°C, for example, of above 110°C, are preferred.

All known clear coats are in principle suitable as the clear coat. Usable clear coats are here both solvent-containing one-component (1 pack) or two-component (2 pack) clear coats, water-dilutable 1 pack or 2 pack clear coats, powder clear coats or aqueous powder clear coat slurries.

Multilayer coatings produced in this manner may be applied onto various types of substrate. The substrates are generally of metal or of plastics. These are often precoated, i.e., plastics substrates may, for example, be provided with a plastics primer, metallic substrates generally have an electrophoretically applied primer and optionally additionally one or more further coating layers, such as, for example, a primer surfacer (filler) layer. These layers are in general cured.

Multilayer coatings obtained with the water-borne base coats meet conventional present-day requirements placed upon automotive coatings. The water-borne base coats are accordingly suitable for original and repair vehicle coating, but may, however, also be used in other sectors, for example, plastics coating, in particular vehicle part coating.

The following examples illustrate the invention.

### Examples

### Examples 1 to 6 (Preparation of Aqueous Binder Dispersions), General

### Preparation Procedure:

A polyesterdiol produced from adipic acid and hexanediol and having a hydroxyl value of 56 mg of KOH/g was mixed with acetone in a reaction vessel equipped with a stirrer and reflux condenser and heated to 40°C. 0.004 wt.% of dibutyltin dilaurate, relative to the polyesterdiol, were added. lsophorone diisocyanate (IPDI) was then added and the mixture was reacted at 50°C until a constant NCO value was obtained. Dimethylolpropionic acid (DMPA) and triethylamine (TEA) were then added and the mixture was reacted at 50°C until a constant NCO value was obtained, Melamine resin was then optionally added and the mixture was mixed thoroughly at 50°C. Deionized water was then added, after which a 6.25 wt.% aqueous solution of ethylenediamine (EDA) was added at 40°C. The temperature was then raised back up to 50°C and this temperature was maintained for 2 hours. The reflux condenser was then replaced by a distillation bridge and the acetone was removed by distillation down to a residual acetone content of < 1 wt.% while the temperature was raised to 70°C. The distillation bridge was then again replaced by the reflux condenser and the batch was heated to 90°C and kept at this temperature for 4 hours (only in the case of Examples 2 to 6). Any water entrained during distillation was replaced by establishing a solids content of 35 wt.% in the resultant binder dispersion.

The tetrahydrofuran insoluble binder fraction of the dispersion solids was determined. First of all, the resin solids content of a sample of each of the aqueous binder dispersions was determined according to DIN EN ISO 3251. To this end, a 1 g sample was weighed out and baked for 1 hour at 125°C. The insoluble binder fraction was determined by weighing out a sample quantity containing 0.3 g of resin solids into an Erlenmeyer flask on an analytical balance to an accuracy of 0.1 mg by means of a transfer pipette and then adding 30 ml of tetrahydrofuran. The contents of the sealed Erlenmeyer flask were then stirred magnetically for 30 minutes and then rinsed in their entirety into a previously weighed centrifuge sleeve and centrifuged in a centrifuge with a rotating radius of 11.47 cm operating at a rotating speed of 21000 revolutions per minute for 30 minutes at 20°C (R,C.F. value 56500). The supernatant phase was then decanted and the centrifuge sleeve was dried with the centrifugate for 30 minutes at 150°C in a drying cabinet. After cooling to room temperature, reweighing was performed to an accuracy of 0.1 mg on the analytical balance. The insoluble binder fraction was calculated in wt.% as the quotient of the final weight (residue) and initial weight (resin solids) multiplied by 100.

The materials used for the synthesis of the individual binder dispersions and the proportions thereof (parts by weight, pbw) are listed in Table 1 below.

**Table 1**

| | Binder dispersion | | | | | |
|---|---|---|---|---|---|---|
| | 1^{**)} | 2^{*)} | 3^{*)} | 4^{*)} | 5^{*)} | 6^{*)} |
| Polyester diol | 19.3 | 17.0 | 14.7 | 12.4 | 17.0 | 14.7 |
| Acetone | 7.3 | 7.3 | 7.3 | 7.3 | 7,3 | 7.3 |
| IPDI | 10.2 | 9.0 | 7.8 | 6.5 | 9.0 | 7.8 |
| DMPA | 1.9 | 1.7 | 1.4 | 1.2 | 1.7 | 1.4 |
| TEA | 1.2 | 1.1 | 0.9 | 0.8 | 1.1 | 0.9 |
| Maprenal® MF 900 | ./. | 3.9 | 7.8 | 11.7 | ./. | ./. |
| Maprenal® VMF 3615 | ./. | ./. | ./. | ./. | 4.9 | 9.8 |
| Deionized water | 43.4 | 45.3 | 47.4 | 49.4 | 44.3 | 45.4 |
| Aqueous solution of EDA (6.25 wt,%) | 16.7 (= 1.04 EDA) | 14.7 (= 0.92 EDA) | 12.7 (= 0.79 EDA) | 10.7 (= 0.67 EDA) | 14.7 (= 0.92 EDA) | 12.7 (= 0,79 EDA) |
| | | | | | | |
| tetrahydrofuran insoluble binder fraction (wt.%) | 0 | 30 | 36 | 41 | 50 | 56 |
| weight ratio of polyurethane resin : melamine resin | 100:0 | 88:12 | 76 : 24 | 64 : 36 | 88:12 | 76 : 24 |

| | | | | | | |
|---|---|---|---|---|---|---|
| *) according to the invention **) comparative Example Maprenal® MF 900, melamine resin from Surface Specialties Maprenal® VMF 3615, melamine resin from Surface Specialties | | | | | | |

### Example 7 (Preparation of an aqueous binder latex):

A reactor was charged with 688 pbw of deionized water and 16 pbw of Rhodapex® EST30 (anionic surfactant available from Rhodia; 30 wt.% in water). The water and surfactant charge was heated to 80°C under nitrogen atmosphere and held at that temperature throughout the reaction. A first stirred monomer emulsion of 317 pbw butyl acrylate, 317 pbw methyl methacrylate, 36 pbw hydroxyethyl acrylate, 36 pbw methacrylic acid, 7 pbw allyl methacrylate, 349 pbw deionized water and 45 pbw Rhodapex® EST30 was prepared separately. A solution of 3.2 pbw of ammonium peroxodisulfate (APS) in 100 pbw of deionized water was added to the reactor content and the first monomer emulsion was then slowly added to the reactor content. After all of the first monomer emulsion was in, the reactor content was held for an additional hour at 80°C , during which a second stirred monomer emulsion of 377 pbw methyl methacrylate, 327 pbw butyl acrylate, 7 pbw allyl methacrylate, 378 pbw deionized water and 15 pbw Rhodapex® EST30 and a solution of 13 pbw of 2-amino-2-methyl-1-propanol (90wt.% in water) in 98 pbw of deionized water were separately prepared, The aqueous 2-amino-2-methyl-1-propanol solution was added slowly to the reaction mixture and then, a solution of 1.1 pbw of ammonium peroxodisulfate (APS) in 70 pbw of deionized water was added slowly to the reactor content. The second monomer emulsion was then slowly added to the reaction content. After the addition was complete, the reactor content was held at 80°C for an additional hour. The aqueous binder latex obtained was then cooled to room temperature.

### Examples 8a-h and 9a-f (Preparation of Silver-Colored Waterbome Base Coats):

Silver-colored waterbome base coats 8a-h and 9a-f were prepared by mixing the constituents listed in Tables 2 and 3 respectively. Proportions are in pbw. The Tables also show the results of technological tests performed with the waterborne base coats.

**Table 2**

| | Waterborne base coats | | | | | | | |
|---|---|---|---|---|---|---|---|---|
| | 8a^{**)} | 8b^{*)} | 8C^{*)} | 8d^{*)} | 8e^{*)} | 8f^{*)} | 8g^{*)} | 8h^{*)} |
| Constituents : | | | | | | | | |
| BE | 7.3 | | | | | | | |
| Aluminum paste ¹⁾ | 5.0 | | | | | | | |
| NMP | 1.6 | | | | | | | |
| Binder dispersion of Example 1 | 10.6 | 5.3 | ./. | 5.3 | 5.3 | 5.3 | 5.3 | ./. |
| Binder dispersion of Example 2 | ./. | 5.3 | 10.6 | ./. | ./. | ./. | ./. | ./. |
| Binder dispersion of Example 3 | ./. | ./. | ./. | 5.3 | ./. | ./. | ./. | ./. |
| Binder dispersion of Example 4 | ./. | ./. | ./. | ./. | 5.3 | ./. | ./. | ./. |
| Binder dispersion of Example 5 | ./. | ./. | ./. | ./. | ./. | 5.3 | ./. | ./. |
| Binder dispersion of Example 6 | ./. | ./. | ./. | ./. | ./. | ./. | 5.3 | 10.6 |
| Deionized water | 10.0 | | | | | | | |
| Aqueous binder latex of Example 7 | 13.7 | | | | | | | |
| Deionized water | 10.0 | | | | | | | |
| Maprenal® MF 900 | 4.5 | | | | | | | |
| Deionized water | 19.0 | | | | | | | |
| Thickener ²⁾ | 9.0 | | | | | | | |
| DMEA, 10 wt.% solution in water | 2.9 | | | | | | | |
| BuOH | 3.0 | | | | | | | |
| DEGMBE | 3.4 | | | | | | | |
| | | | | | | | | |
| Brightness L* (units) ³⁾ | 135 | 137 | 139 | 136 | 135 | 136 | 136 | 138 |
| Cleanability ⁴⁾ | 4 | 5 | 8 | 6 | 6 | 5 | 7 | 9 |

**Table 3**

| | Waterborne base coats | | | | | |
|---|---|---|---|---|---|---|
| | 9a^{*)} | 9b^{*)} | 9c^{*)} | 9d^{*)} | 9e^{*)} | 9f^{**)} |
| Constituents: | | | | | | |
| BE | 7.3 | | | | | |
| Aluminum paste¹⁾ | 5.0 | | | | | |
| NMP | 1.6 | | | | | |
| Binder dispersion of Example 1 | 7.7 | ./. | 7.7 | 7.7 | ./. | 15.4 |
| Binder dispersion of Example 2 | 7.7 | 15.4 | ./. | ./. | ./. | ./. |
| Binder dispersion of Example 4 | ./. | ./. | 7.7 | ./. | ./. | ./. |
| Binder dispersion of Example 6 | ./. | ./. | ./. | 7.7 | 15.4 | ./. |
| Deionized water | 10.0 | | | | | |
| Aqueous binder latex of Example 7 | 19.9 | | | | | |
| Deionized water | 22.5 | | | | | |
| Thickener ²⁾ | 9.0 | | | | | |
| DMEA. 10 wt.% solution in water | 2.9 | | | | | |
| BuOH | 3.0 | | | | | |
| DEGMBE | 3.4 | | | | | |
| | | | | | | |
| Brightness L* (units)³⁾ | 137 | 139 | 135 | 136 | 138 | 135 |
| Cleanability⁴⁾ | 5 | 6 | 5 | 5 | 7 | 3 |

| | | | | | | |
|---|---|---|---|---|---|---|
| ^{*)} according to the invention ^{**)} comparative Example BE, Butoxy ethanol NMP, N-Methyl pyrrolidone BuOH, n-Butanol DEGMBE, Diethylene glycol monobutyl ether ¹⁾ Mixture of 50 pbw BE with 50 pbw Stapa Hydrolac® WHH 2154 from Eckart. ²⁾ Mixture of 33 pbw Viscalex® HV 30 from Allied Colloids, 2.5 pbw DMEA and 64.5 pbw of deionized water. ³⁾ The water-borne base coats were each spray-applied to steel test panels provided with a precoating consisting of electrocoat and primer surfacer in 14 µm dry film thickness. After flashing-off for 5 minutes at 20°C and additional 5 minutes at 80°c the test panels were each spray coated with a commercial two-component polyurethane clear coat in 40 µm dry film thickness and after flashing-off for 5 minutes at 20°C baked for 20 minutes at 140°C object temperature. The brightness L* (according to CIEL*a*b*, DIN 6174) at an illumination angle of 45 degrees to the perpendicular and an observation angle of 15 degrees to the specular was measured with the instrument X-Rite MA 68 sold by the firm X-Rite Incorporated, Grandeville, Michigan, U.S.A. ⁴⁾ Removability of the water-borne base coats was tested by applying them in each case to a dry film thickness of 16 µm onto uncoated metal test sheets and then drying them for 1 hour at room temperature. Immediately thereafter, drops of a cleaning solution (a mixture of 90 pbw of deionized water, 5 pbw of ethylene glycol monobutyl ether, 3.9 pbw of propanol, 1 pbw of N-methylpyrrolidone, 0.1 pbw of dimethylethanolamine) were then applied separately from one another onto the dried water-borne base coat layer at 1 minute intervals over a period of 5 minutes. A final drop was then additionally applied 4.5 minutes after application of the first drop. 30 seconds after application of this final drop, the metal sheet was dipped four times in succession into a vessel filled with water. A visual inspection was then performed to determine whether or not the coating layer had become detached from the points at which the drops had been applied. If this was not the case, the metal sheet which had been dipped four times into water was then additionally exposed to four up and down motions of a water jet Using a wash bottle at a distance of the wash bottle's water outlet from the metal sheet of 2-3 cm. In so doing, the spray pressure was kept constant and it was ensured that the jet did not linger over any single point. Another visual inspection was then performed. The quality of removability of the water-borne base coats is stated in Tables 2 and 3 as indices, elevated indices meaning good removability and low indices poor removability. | | | | | | |

Index 12 means that the corresponding dried water-borne base coat had become detached from the point which had previously been provided with the drop of cleaning solution for 30 seconds after being dipped four times in water. Indices 11-7 correspondingly mean that the corresponding dried water-borne base coat had become detached from the point which had previously been provided with a drop of cleaning solution for respectively one, two, three, four or five minutes after being dipped four times in water.

Index 6 means that the corresponding dried water-borne base coat had only become detached from the point which had previously been provided with a drop of cleaning solution for 30 seconds after exposure to the water jet. Indices 5-1 correspondingly mean that the corresponding dried water-borne base coat had only become detached from the point which had previously been provided with a drop of cleaning solution for respectively one, two, three, four or five minutes after exposure to the water jet.

## Claims

1. A process for the production of aqueous binder dispersions, comprising the steps;
1) mixing 50 to 95 solids parts by weight of at least one non-aqueous polyurethane resin with 5 to 50 solids parts by weight of at least one non-aqueous aminoplast resin, wherein the total of the solids parts by weight amounts to 100 and wherein polyurethane resin and aminoplast resin are inert towards each other,
2) converting the resultant non-aqueous mixture into an aqueous dispersion comprising dispersion particles of polyurethane resin and aminoplast resin by mixing with water, and
3) subjecting the resultant aqueous dispersion to condensation reaction conditions of the aminoplast resin present in the dispersion particles, thereby obtaining a tetrahydrofuran-insoluble binder fraction of the dispersion solids of 20 to 90 wt.%.

2. The process of claim 1, wherein the tetrahydrofuran-insoluble binder fraction is to 50 to 80 wt.%.

3. The process of claim 1 or 2, wherein the polyurethane resin is an acid-functional polyurethane resin with a weight-average molar mass (Mw) of 500 to 10000 and an acid value of 10 to 35 mg of KOH/g.

4. The process of claim 1 or 2, wherein the polyurethane resin is the reaction product of an isocyanate and acid-functional polyurethane resin precursor with at least one chain extender selected from the group consisting of polyols, hydrazine, hydrazine derivatives, polyamines and water.

5. The process of claim 1 or 2, wherein the polyurethane resin is the reaction product of an isocyanate- and acid-functional polyurethane resin precursor with at least one chain extender selected from the group consisting of polyols, hydrazine, hydrazine derivatives and polyamines and wherein the isocyanate- and acid-functional polyurethane resin precursor is reacted with the at least one chain extender during and/or after conversion into the aqueous phase.

6. The process of claim 4 or 5, wherein the chain-extended polyurethane resin exhibits a weight-average molar mass (Mw) of 20000 to 50000 and an acid value of 10 to 35 mg of KOH/g.

7. The process of any of the preceding claims, wherein the aminoplast resin is a melamine resin.

8. The process of claim 7, wherein the melamine resin is a completely etherified melamine resin.

9. The process of claim 8, wherein the completely etherified melamine resin is etherified with methanol.

10. The process of claim 9, wherein the melamine resin is hexamethoxymethylmelamine.

11. The process of any one of the preceding claims, wherein heat is supplied and/or a catalyst added in process step 3).

12. Aqueous binder dispersions produced by the process of any one of the preceding claims.

13. Aqueous coating compositions produced using an aqueous binder dispersion of claim 12 as binder.

14. A process for the production of base coat/clear coat two-layer coatings using an aqueous coating composition of claim 13 as water-borne base coat.
